# EUROPEAN PATENT SPECIFICATION

(11) **EP 4 575 265 B1**
(45) Date of publication and mention of the grant of the patent: **16.09.2026**
(21) Application number: 24220876.7
(22) Date of filing: 18.12.2024
(51) Int. Cl.: F16H 21/44

(54) **LINKAGE ASSEMBLY SUPPORTING A MATERIAL LAYER THAT MAINTAINS A CONSTANT LENGTH ACROSS A RANGE OF MOTION**
VERBINDUNGSANORDNUNG ZUR UNTERSTÜTZUNG EINER MATERIALSCHICHT, DIE ÜBER EINEN BEWEGUNGSBEREICH EINE KONSTANTE LÄNGE BEIBEHÄLT
ENSEMBLE DE LIAISON SUPPORTANT UNE COUCHE DE MATÉRIAU QUI MAINTIENT UNE LONGUEUR CONSTANTE SUR UNE PLAGE DE MOUVEMENT

(30) Priority: 20.12.2023 US 202363612940 P; 04.06.2024 US 202418733716
(43) Date of publication of application: 25.06.2025
(73) Proprietor: The Boeing Company, Arlington, VA 22202 (US)
(72) Inventor: HENRY, Christopher P, ARLINGTON, 22202 (US); SEVERANCE, Jensen, ARLINGTON, 22202 (US)
(74) Representative: Plasseraud IP

(56) References cited:
- WO-A1-2023/235061
- AU-B2- 2013 224 712
- US-A- 13 889
- US-A- 3 754 516

## Description

### FIELD

The disclosed subject matter relates generally to a linkage assembly that includes a plurality of linkages, and more particularly to a linkage assembly supporting a material layer that maintains a constant length across a range of motion of the linkage assembly between two rigid states.

### BACKGROUND

Machines can incorporate a wide variety of mechanical linkages to transfer mechanical work, implement a mechanical function, or reconfigure the machine for an intended purpose. As an example, a machine can include a linkage assembly of two or more linkages that are coupled to each other via a series of joints. Joints by which two neighboring linkages are coupled to each other can enable rotation and/or translation of one linkage relative to another linkage.

AU 2013224712 B2, in accordance with its abstract, states an aerodynamic structure attached to the rear face of a truck cargo body, which rear typically contains a door assembly, with a plurality of doors that swing open on hinges, or a single, full-width door, which rolls upwardly.

US 3754516 A, in accordance with its abstract, states a parallel motion mechanism for use as an adjustable retainer for blocking and bracing loads in cargo-carrying vehicles, such as railroad cars, semi-trailers, ships, airplanes and containers. The mechanism comprises a pair of elongated, rigid members which are relatively laterally movable between a collapsed position and an extended position, and a connecting linkage which at all times maintains the members in parallel relationship. The connecting linkage comprises a pair of longitudinally spaced-apart toggle linkages each comprising four equal-length links having their ends pivotally connected to form a parallelogram, two opposite pivot points of the parallelogram being respectively pivotally connected to the two members. A guiding linkage is provided comprising a pair of elongated guide elements respectively extending between and pivotally connected to corresponding ones of the remaining pivot points of the two toggle linkages and being guided for relative collinear extension and retraction in response to movement of the toggle linkages between collapsed and the extended positions.

### SUMMARY

In a particular implementation, a linkage assembly is proposed as per appended claim 1 to 8.

In another particular implementation, a reconfigurable structure is proposed as per appended claims 9 to 15.

The material layer maintains a constant length across a range of motion of each linkage assembly, thereby reducing or eliminating in-plane strain within the material layer across the range of motion. In an example, the reconfigurable structure can provide a first configuration corresponding to a curved or annular tube shape for a fluid vessel, conduit, or other suitable structure, and a second configuration corresponding to a flattened shape. The flattened shape of the second configuration can be used for storage and transport of the reconfigurable structure.

The features, functions, and advantages described herein can be achieved independently in various implementations or may be combined in yet other implementations, further details of which can be found with reference to the following description and drawings. This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

FIG. 1 depicts an example linkage assembly that includes a plurality of linkages, including at least a pair of linkages that are rotatably coupled to each other via a hinge.
FIG. 2 depicts the linkage assembly of FIG. 1 in which the pair of linkages have a first configuration.
FIG. 3 depicts the linkage assembly of FIG. 1 in which the pair of linkages have a second configuration that differs from the first configuration of FIG. 2.
FIG. 4 depicts another example linkage assembly having a first configuration and that includes the linkage assembly of FIG. 1 as a sub-assembly.
FIG. 5 depicts aspects of a base linkage sub-assembly of the linkage assembly of FIG. 4 for the first configuration.
FIG. 6 depicts the linkage assembly of FIG. 4 having a second configuration that differs from the first configuration of FIG. 4.
FIG. 7 depicts aspects of the base linkage sub-assembly of the linkage assembly of FIG. 6 for the second configuration.
FIG. 8 depicts an example reconfigurable structure having a first configuration and that includes multiple instances of the linkage assembly of FIG. 4.
FIGS. 9, 10, and 11 depict additional aspects of the reconfigurable structure of FIG. 8.
FIG. 12 depicts the reconfigurable structure of FIG. 8 having a second configuration that differs from the first configuration of FIG. 8.
FIG. 13 depicts another example linkage assembly having a first configuration and that includes the linkage assembly of FIG. 1 as a sub-assembly.
FIG. 14 depicts the linkage assembly of FIG. 13 having a second configuration that differs from the first configuration of FIG. 13.
FIG. 15 depicts an example truss by which a material layer can be mounted to linkages of a reconfigurable structure.

### DETAILED DESCRIPTION

A linkage assembly is disclosed that includes a plurality of linkages. The linkage assembly can form part of a reconfigurable structure, such as a fluid vessel configured to hold or transport a fluid in a liquid phase, vapor phase and/or gas phase, a conduit, an airfoil, a hydrofoil, a control surface, a wheel or other suitable structure. Linkages of the linkage assembly can be rotatably coupled to each other in a manner that enables a material layer mounted to an exterior edge of the linkage assembly to maintain a constant length across a range of motion of the linkages. By maintaining a constant length of the material layer across a range of motion of the linkages, in-plane strain within the material layer can be reduced or eliminated. This configuration enables the material layer to be formed from materials having a relatively high modulus of elasticity, such as metals including aluminum and steel, as examples.

In an example, a plurality of linkages of the linkage assembly includes at least a pair of linkages that are rotatably coupled to each other via a hinge formed by a first pin-in-slot joint and a second pin-in-slot joint. The first pin-in-slot joint includes a first curved slot formed within a (first) linkage of the pair of linkages and a first pin of another (second) linkage of the pair of linkages that is retained within the first curved slot. The second pin-in-slot joint includes a second curved slot formed within the (first) linkage of the pair of linkages and a second pin of another (second) linkage of the pair of linkages that is retained within the second curved slot. The hinge formed by the first pin-in-slot joint and the second pin-in-slot joint takes the form of a virtual joint having a virtual pivot located on the material layer, enabling the material layer to maintain a constant length across a range of motion of the linkages.

The disclosed linkage assemblies and reconfigurable structures offer the potential to address various issues. For example, within the context of fluid vessels such as fuel tanks, existing fuel tanks compatible with high acceleration aircraft are not able to be stowed in a flattened configuration when not deployed and thus occupy significant volume during storage and transport. The disclosed linkage assemblies and reconfigurable structures (e.g., a fluid vessel) can be reconfigured to a flattened shape that is many times more compact than its deployed state while also maintaining a competitive fluid holding capacity in the deployed state. In at least some examples, the disclosed reconfigurable structures can be flat packed for storage and transport when not deployed for use.

Furthermore, within the context of an airfoil, a hydrofoil, or a control surface, the reconfigurable structures disclosed herein can provide a range of aerodynamic or hydrodynamic performance characteristics through rotation or manipulation of the various linkages that support the material layer. As yet another example, the reconfigurable structures disclosed herein can take the form of a wheel that can be deployed for use on a vehicle, while also enabling the wheel to be flattened for storage and transport. In each of these examples, the material layer can maintain a constant length across a range of motion of the linkages, thereby enabling an expanded range of materials from which the material layer can be formed. The example linkage assemblies disclosed herein can include linkages having a repeating configuration, enabling the linkages to be manufactured using the same techniques and tooling.

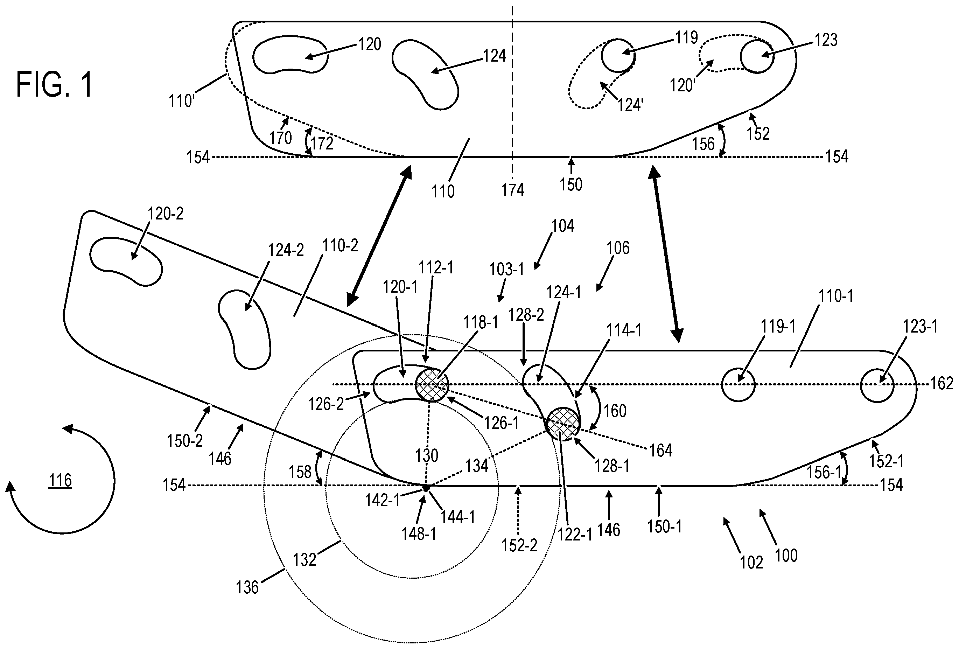

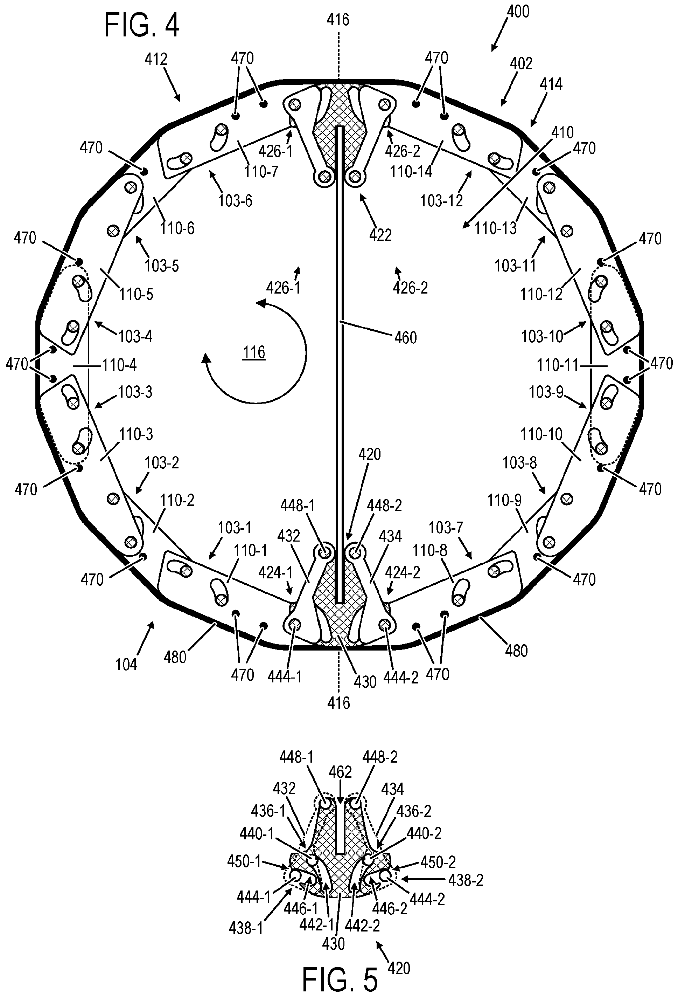

FIG. 1 depicts an example linkage assembly 100 that includes a plurality of linkages 102. The plurality of linkages 102 includes at least a pair of linkages 104 rotatably coupled to each other that form part of a linkage chain 106. In the example of FIG. 1, first linkage 110-1 and second linkage 110-2 of the pair of linkages 104 are neighboring linkages of linkage chain 106. As described in further detail herein, the plurality of linkages 102 can include additional linkages rotatably coupled to each other to form linkage chain 106 in combination with the pair of linkages 104. Linkage assembly 100, including the pair of linkages 104 can form part of a reconfigurable structure in combination with one or more other linkages, such as described with reference to FIGS. 4, 6, 13, and 14 as examples.

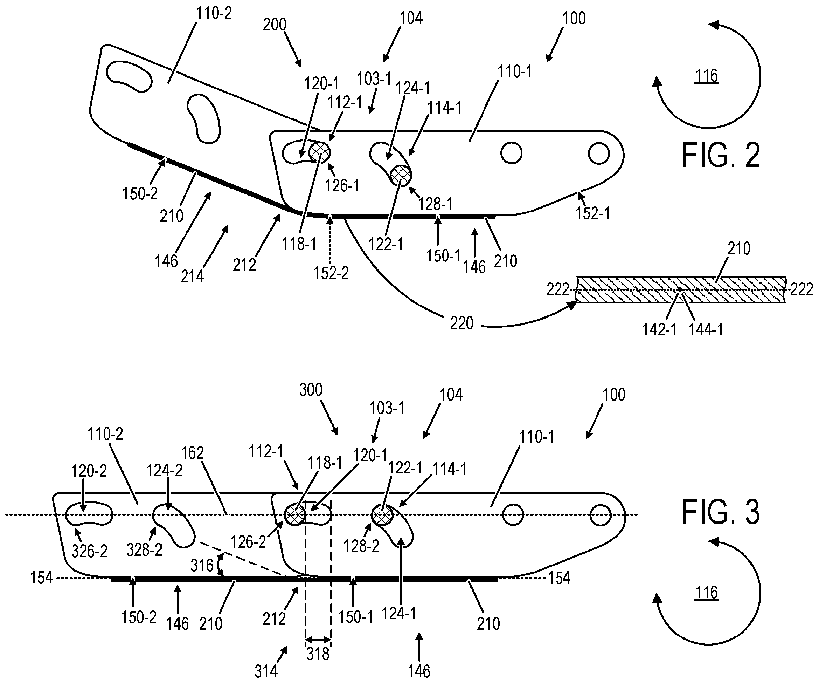

In the example of FIG. 1, first linkage 110-1 and second linkage 110-2 are rotatably coupled to each other via a hinge 103-1. Hinge 103-1 enables first linkage 110-1 and second linkage 110-2 to rotate relative to each other within a plane of rotation 116 to provide different configurations of linkage assembly 100, as described in further detail with reference to FIGS. 2 and 3.

First linkage 110-1, second linkage 110-2, and other linkages of linkage chain 106 can each refer to an instance of a linkage configuration 110, an example of which is depicted in FIG. 1. In at least some examples, some or all of the linkages of linkage chain 106, including first linkage 110-1 and second linkage 110-2 each have the same shape and features as linkage configuration 110. Accordingly, aspects of the various linkages disclosed herein are at times described in further detail herein with reference to linkage configuration 110.

In the example of FIG. 1, hinge 103-1 rotatably coupling first linkage 110-1 and second linkage 110-2 to each other includes a first pin-in-slot joint 112-1 and a second pin-in-slot joint 114-1. First pin-in-slot joint 112-1 includes a first curved slot 120-1 and a first pin 118-1 that is retained within first curved slot 120-1. In this configuration, first pin 118-1 can travel along and rotate within first curved slot 120-1 as the pair of linkages 104 are rotated relative to each other. In the example configuration of the pair of linkages 104 depicted in FIG. 1, first pin 118-1 is located at a first position at a first terminal end 126-1 of first curved slot 120-1 that opposes a second terminal end 126-2 of the first curved slot.

In the example depicted in FIG. 1, first curved slot 120-1 is formed within or otherwise defined by first linkage 110-1. First curved slot 120-1 is an instance of first curved slot 120 of linkage configuration 110. As a first example, first pin 118-1 passes through and is retained within a first circular opening (e.g., depicted at 119 with reference to linkage configuration 110) that is formed within or defined by second linkage 110-2. As a second example, first pin 118-1 is mounted to or integrated with second linkage 110-2. Alternatively, first curved slot 120-1 can be formed within or defined by second linkage 110-2. In this alternative example, first pin 118-1 passes through and is retained within a first circular opening formed within first linkage 110-1, or first pin 118-1 can be mounted to or integrated with first linkage 110-1.

Second pin-in-slot joint 114-1 includes a second curved slot 124-1 and a second pin 122-1 that is retained within second curved slot 124-1. In this configuration, second pin 122-1 can travel along and rotate within second curved slot 124-1 as the pair of linkages 104 are rotated relative to each other. In the example configuration of the pair of linkages 104 depicted in FIG. 1, second pin 122-1 is located at a first position at a first terminal end 128-1 of second curved slot 124-1 that opposes a second terminal end 128-2 of the second curved slot.

In the example depicted in FIG. 1, second curved slot 124-1 is formed within or otherwise defined by first linkage 110-1. Second curved slot 124-1 is an instance of second curved slot 124 of linkage configuration 110. As a first example, second pin 122-1 passes through and is retained within a second circular opening (e.g., depicted at 123 with reference to linkage configuration 110) formed within or defined by second linkage 110-2. As a second example, second pin 122-1 is mounted to or integrated with second linkage 110-2. Alternatively, second curved slot 124-1 can be formed within or defined by second linkage 110-2. In this alternative example, second pin 122-1 passes through and is retained within a second circular opening formed within first linkage 110-1, or second pin 122-1 can be mounted to or integrated with first linkage 110-1.

First curved slot 120-1 of first pin-in-slot joint 112-1 has a first radius 130. In at least some examples, first radius 130 can be constant across an angular range of displacement defined by first curved slot 120-1 such that the first curved slot forms an arc segment of a first circle 132. Second curved slot 124-1 of second pin-in-slot joint 114-1 has a second radius 134. In at least some examples, second radius 134 can be constant across an angular range of displacement defined by second curved slot 124-1 such that the second curved slot forms an arc segment of a second circle 136. As an example, the angular range of displacement of first curved slot 120-1 between terminal ends 126-1 and 126-2 is equal to the angular range of displacement of second curved slot 124-1 between terminal ends 128-1 and 128-2. This angular range of displacement is also equal to angles 156 and 172. In the example of FIG. 1, first radius 130 of first curved slot 120-1 and second radius 134 of second curved slot 124-1 have a common radius center 142-1 that forms a virtual pivot 144-1 of hinge 103-1. In this example, second circle 136 and first circle 132 are concentric about common radius center 142-1, and second radius 134 of second curved slot 124-1 has a greater length than first radius 130 of first curved slot 120-1.

In the example of FIG. 1, hinge 103-1 forms a virtual joint 148-1 in which first linkage 110-1 and second linkage 110-2 can rotate relative to each other about virtual pivot 144-1. Virtual pivot 144-1 is defined as the intersection of first radius 130 and second radius 134, at common radius center 142-1. Accordingly, common radius center 142-1 and virtual pivot 144-1 are coincident across the range of motion of first linage 110-1 relative to second linkage 110-2. In the example of FIG. 1, common radius center 142-1 and virtual pivot 144-1 are located on or beyond an exterior edge 146 of the pair of linkages 104 within plane of rotation 116. As described in further detail with reference to FIGS. 2 and 3, common radius center 142-1 and virtual pivot 144-1 are located on or within a material layer (e.g., material layer 210) mounted to or supported by exterior edge 146 of the linkage assembly. As common radius center 142-1 and virtual pivot 144-1 are located on or within the material layer, the length of the material layer is maintained across the range of motion of the linkage assembly, thereby reducing or eliminating in-plane strain within the material layer across the range of motion. To achieve a hinge design that does not create in-plane strain within material layer 210 across the range of motion, curved slots 120-1 and 124-1 can be designed to place common radius center 142-1 and virtual pivot 144-1 on the centerline of material layer 210.

As previously described, the pair of linkages 104 can form part of a linkage chain 106 that includes additional linkages that are rotatably coupled with each other via hinges that are similarly configured as hinge 103-1. Each hinge of the linkage chain 106 can form a respective virtual joint, as previously described with reference to virtual joint 148-1 of hinge 103-1. As an example, second linkage 110-2 can be rotatably coupled with another neighboring linkage (not shown in FIG. 1) of the plurality of linkages 102 via another hinge that is formed by a pair of pin-in-slot joints or other suitable pair of joints at an opposing end of the second linkage from first linkage 110-1.

In FIG. 1, for example, second linkage 110-2 includes a first curved slot 120-2 and a second curved slot 124-2 that are formed within or otherwise defined by the second linkage. First curved slot 120-2 and second curved slot 124-2 are additional instances of curved slots 120 and 124 of linkage configuration 110. In this example, first curved slot 120-2 can rotatably couple second linkage 110-2 with another neighboring linkage via a first pin that is retained within first curved slot 120-2, and second curved slot 124-2 can rotatably couple second linkage 110-2 with the neighboring linkage via a second pin that is retained within second curved slot 124-2. Alternatively, first curved slot 120-2 and second curved slot 124-2 can be formed within or otherwise defined by the neighboring linkage. In this alternative example, first and second pins can pass through circular openings formed within or otherwise defined by second linkage 110-2, or such pins can be mounted to or integrated with second linkage 110-2.

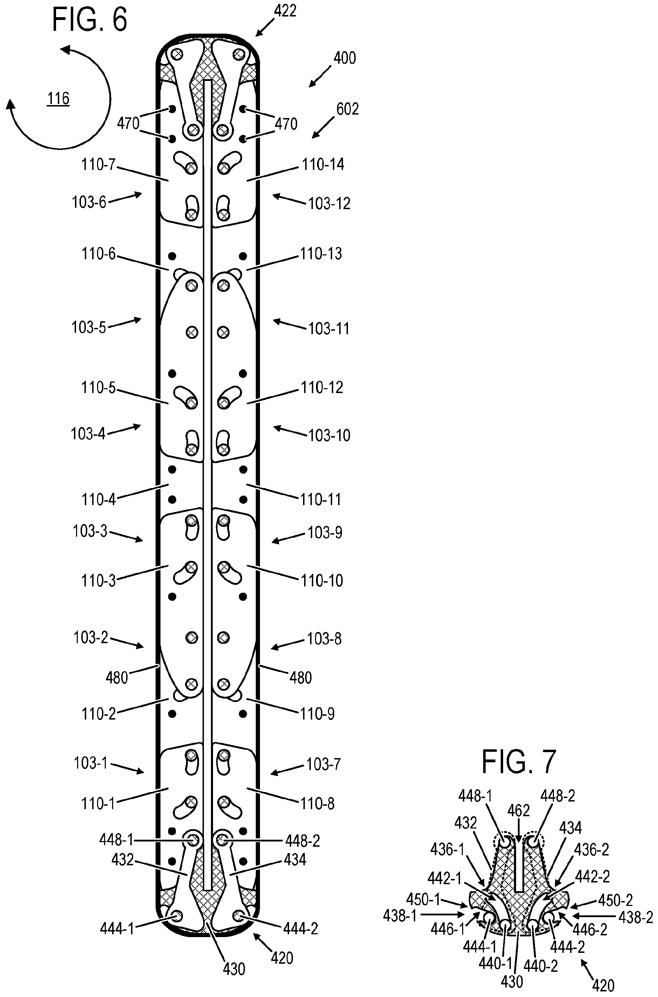

Furthermore, in at least some examples, first linkage 110-1 can be rotatably coupled with another neighboring linkage (not shown in FIG. 1) of the plurality of linkages 102 via another hinge that is formed by a pair of pin-in-slot joints or other suitable pair of joints at an opposing end of the first linkage from second linkage 110-2. In FIG. 1, for example, first linkage 110-1 has a first circular opening 119-1 and a second circular opening 123-1 as instances of circular openings 119 and 123 of linkage configuration 110 to accommodate respective pins. In this example, a first pin can rotatably couple first linkage 110-1 with the neighboring linkage via a first curved slot that is formed within or defined by the neighboring linkage, and a second pin can rotatably couple first linkage 110-1 with the neighboring linkage via a second curved slot (or a second follower surface as described with reference to FIGS. 5 and 6) that is formed within or defined by the neighboring linkage. Alternatively, the curved slots and/or follower surfaces can be formed within or otherwise defined by first linkage 110-1. In this alternative example, the first and second pins can be retained within circular openings formed within the neighboring linkage, or the first and second pins can be mounted to or integrated with the neighboring linkage.

In the example of FIG. 1, exterior edge 146 of the pair of linkages 104 within plane of rotation 116 is formed by exterior edge portions that include at least exterior edge portion 150-1 and exterior edge portion 152-1 of first linkage 110-1. Exterior edge portion 150-1, in this example, forms a linear or planar shape that is colinear with axis 154. Exterior edge portion 152-1, in this example, also forms a linear or planar shape that is angled relative to exterior edge portion 150-1, as indicated by angle 156-1. In FIG. 1, angle 156-1 and exterior edge portions 150-1 and 152-1 are represented with respect to linkage configuration 110 as angle 156 and exterior edge portions 150 and 152.

A portion of exterior edge 146 of second linkage 110-2 within plane of rotation 116 can be similarly shaped as first linkage 110-1. For example, exterior edge 146 is further formed by exterior edge portions of second linkage 110-2, including at least exterior edge portion 150-2 and exterior edge portion 152-2. Within the configuration of FIG. 1, exterior edge portion 152-2 of second linkage 110-2 is colinear with exterior edge portion 150-1 of first linkage 110-1 and with axis 154. Furthermore, in the configuration of the pair of linkages 104 depicted in FIG. 1, exterior edge portion 150-2 is angled relative to each of exterior edge portion 152-2 of second linkage 110-2, exterior edge portion 150-1 of first linkage 110-1, and axis 154 as indicated by angle 158. In this configuration, angle 158 is equal in magnitude to an angle 160 that is formed between an axis 162 that is parallel to axis 154 and passes through first pin 118-1, and is equal to an axis 164 that passes through first pin 118-1 and second pin 122-1. Furthermore, in this configuration, exterior edge portion 152-2 is colinear with exterior edge portion 150-1 along axis 154. Additionally, in this example, circular openings 119-1 and 123-1, and respective pins retained therein reside along axis 162.

In at least some examples, one or more linkages of a linkage assembly can include a different exterior edge shape from the examples depicted in FIG. 1 with respect to first linkage 110-1 and second linkage 110-2. For example, another linkage configuration 110' can include an edge portion 170 (represented by broken lines) having a linear or planar shape that is angled relative to edge portion 150 and axis 154 by an angle 172. Edge portion 170 can provide an additional location or region of the linkage upon which a material layer can be mounted and/or supported. Furthermore, in at least some examples, angle 172 and angle 156 can be equal but orientated in opposing directions to provide a symmetrical configuration about a midplane 174 of linkage configuration 110', shown with dashed lines, that is orthogonal to axis 154. In at least some examples, linkage configuration 110' has a second pair of curved slots 120' and 124' in place of circular openings 119 and 123 that are used to retain respective pins of a neighboring linkage. Examples of linkage configuration 110' are described in further detail with reference to FIG. 4.

In at least some examples, linkage configurations 110 and 110' define openings or cutouts located away from slots 120 and 124, and away from pin openings 119 and 123 that decrease the mass of the linkage while maintaining sufficient structural integrity. The quantity and configuration of such openings and cutouts is application dependent.

FIG. 2 depicts linkage assembly 100 of FIG. 1 in which the pair of linkages 104 of the linkage assembly have a first configuration 200, as previously depicted in FIG. 1. First configuration 200 corresponds to second linkage 110-2 being rotated at angle 158 (in FIG. 1) relative to first linkage 110-1. In this first configuration 200, first pin 118-1of first pin-in-slot joint 112-1 is located at first terminal end 126-1 of first curved slot 120-1, and second pin 122-1 of second pin-in-slot joint 114-1 is located at first terminal end 128-1 of second curved slot 124-1. Locating the pins at the first terminal end of the curved slots in the first configuration 200 enables the linkage assembly to provide and maintain a rigid state in the first configuration when second linkage 110-2 is loaded with a clockwise torque against a fixed first linkage 110-1. Furthermore, in this example, the orientation and spacing of curved slots 120-1 and 124-1 relative to each other, including the location of first terminal ends 126-1 and 128-1 defines the angle (e.g., 158 of FIG. 1) at which second linkage 110-2 is rotated relative to second linkage 110-1 in first configuration 200.

FIG. 2 further depicts linkage assembly 100 including a material layer 210 that is mounted to and supported by first linkage 110-1 and second linkage 110-2. In first configuration 200 of FIG. 2, material layer 210 forms a first shape 214. As an example, the first shape 214 of material layer 210 is a convex shape (or curved shape) in first configuration 200 of FIG. 2. Material layer 210 can take the form of and be referred to as a membrane or skin. Material layer 210, in this example, extends along at least a portion of exterior edge 146, including at least exterior edge portions 150-1 and 152-1 of first linkage 110-1, and exterior edge portions 150-2 and 152-2 of second linkage 110-2. Additionally, material layer 210 spans a boundary 212 between first linkage 110-1 and second linkage 110-2.

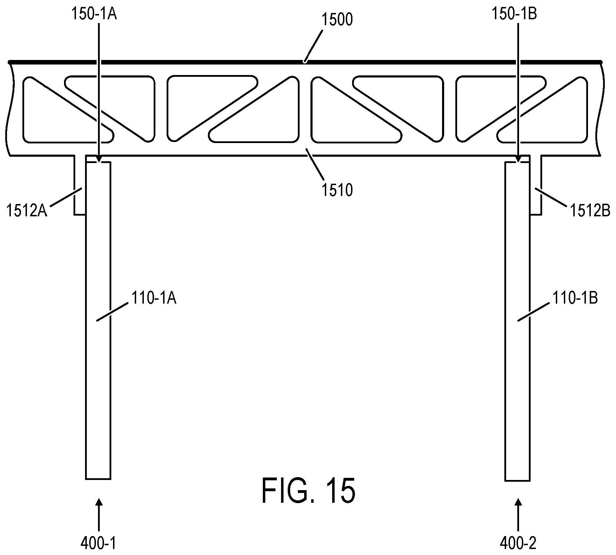

In at least some examples, material layer 210 is mounted directly to first linkage 110-1 and second linkage 110-2 along at least a portion of exterior edge 146, including exterior edge portions 150-1 and 152-1 of first linkage 110-1, and exterior edge portions 150-2 and 152-2 of second linkage 110-2. Additionally or alternatively, as described herein, material layer 210 can be mounted to first linkage 110-1 and second linkage 110-2 via an intermediate structure (e.g., as shown in FIG. 15). In each of these examples, common radius center 142-1 and virtual pivot 144-1 can be located on or within material layer 210 so that the length of the material layer is maintained across the range of motion of the linkage assembly, thereby reducing or eliminating in-plane strain within the material layer.

FIG. 2 schematically depicts a detailed view of material layer 210 at 220 in which common radius center 142-1 and virtual pivot 144-1 are located within the material layer. In this example, common radius center 142-1 and virtual pivot 144-1 are located on centerline 222 of material layer 210. In another example, common radius center 142-1 and virtual pivot 144-1 are located on an exterior surface of material layer 210. In-plane strain within material layer 210 may increase as common radius center 142-1 and virtual pivot 144-1 are moved away from the centerline of the material layer. It will be understood that the configuration of hinge 103-1, including the configuration of slots 120-1 and 124-1 can be designed with respect to the location of material layer 210. If the location of the material layer changes (e.g., is offset by a greater distance from the linkages) then the configuration of slots 120-1 and 124-1 can be changed so that common radius center 142 and virtual pivot 144 are located on or within material layer 210 (e.g., one or near the centerline of the material layer).

As a constant length of material layer 210 is maintained across the range of motion of the linkage assembly, the material layer need not stretch in-plane. Accordingly, material layer 210 can be formed from a material, such as metal (e.g., aluminum, steel, etc.) that exhibits a relatively high modulus of elasticity. Additionally, through use of the disclosed configuration of hinge 103-1, material layer 210 need not undergo deformation in-plane due to rotation of first linkage 110-1 relative to second linkage 110-2.

FIG. 3 depicts linkage assembly 100 of FIG. 1 in which the pair of linkages 104 of linkage assembly 100 have a second configuration 300. Second configuration 300 of FIG. 3 differs from first configuration 200 of FIG. 2 due to rotation and translation of second linkage 110-2 relative to first linkage 110-1. In this second configuration 300 of FIG. 3, exterior edge portion 150-1 of first linkage 110-1 and exterior edge portion 150-2 of second linkage 110-2 are colinear with each other and axis 154, thereby forming a planar configuration of exterior edge 146.

In second configuration 300 of FIG. 3, first pin 118-1 of first pin-in-slot joint 112-1 is located at second terminal end 126-2 of first curved slot 120-1, and second pin 122-1 of second pin-in-slot joint 114-1 is located at second terminal end 128-2 of second curved slot 124-1. Locating the pins at the second terminal end of the curved slots in the second configuration 300 enables the linkage assembly to provide and maintain a rigid state in the second configuration when 110-2 is loaded with a counterclockwise torque against fixed 110-1.

FIG. 3 depicts a rotation angle 316 by which first linkage 110-1 and second linkage 110-2 are rotated relative to each other via hinge 103 between first configuration 200 of FIG. 2 and second configuration 300 of FIG. 3. A magnitude of rotation angle 316 is equal to each of angles 158, 160, and the angular displacement defined by curved slots 120 and 124, as previously described with reference to FIG. 1.

As first linkage 110-1 and second linkage 110-2 are rotated relative to each other via hinge 103 between first configuration 200 of FIG. 2 and second configuration 300 of FIG. 3, the first linkage and the second linkage also translate relative to each other by a translation distance 318. As an example, translation distance 318 is equal to a length of the circular arc segments of curved slots 120-1 and 124-1 (as measured between their respective pin locations at the terminal ends of the curved slots). Thus, hinge 103-1 formed by first pin-in-slot joint 112-1 and second pin-in-slot joint 114-1 enables rotation and translation of first linkage 110-1 and second linkage 110-2 relative to each other. Furthermore, in second configuration 300, first pin 118-1 and second pin 122-1 are aligned with and reside along axis 162 that is parallel to axis 154, thereby configuring exterior edge 146 of the pair of linkages 104 along the same plane such that exterior edge components 150-1 and 150-2 are colinear. As first pin-in-slot joint 112-1 and second pin-in-slot joint 114-1 of hinge 103-1 constrain movement in the form of rotation and translation of first linkage 110-1 and second linkage 110-2 relative to each other, hinge 103-1 can be characterized as providing a single degree of freedom with respect to first linkage 110-1 and second linkage 110-2.

Furthermore, in second configuration 300, first pin 118-1 and second pin 122-1 are aligned with and reside along axis 162 that is parallel to axis 154, thereby configuring exterior edge 146 of the pair of linkages 104 along a s. In second configuration 300, a location of pins of another neighboring linkage that may be retained within each of curved slots 120-2 and 124-2 of second linkage 110-2 at second terminal ends 326-2 and 328-2, respectively, are also aligned with and reside along axis 162, thereby enabling an exterior edge portion of the neighboring linkage to be colinear with axis 154, as described with reference to FIG. 6.

Material layer 210 forms a second shape 314 in second configuration 300 that differs from first shape 214 of FIG. 2. As an example, the second shape 314 of material layer 210 is a planar shape (flat shape) in second configuration 300. While the first shape 214 and the second shape 314 of material layer 210 differ from each other (e.g., have different curvature), a length of material layer 210 remains constant throughout a range of motion between first configuration 200 and second configuration 300. Accordingly, material layer 210 experiences reduced or zero in-plane strain due to reconfiguration of linkage assembly 100 between first configuration 200 and second configuration 300.

In other examples, second configuration 300 may instead provide an angle between exterior edge portion 150-1 of first linkage 110-1 and exterior edge portion 150-2 of second linkage 110-2 that differs from the angle (e.g., 158) in first configuration 200. For example, curved slots 120-1 and 124-1 can be extended, shortened, or otherwise reconfigured to provide any suitable angle between first linkage 110-1 and second linkage 110-2 in first and second configurations.

In FIG. 3 section 212 is the portion of material layer 210 that is not in direct contact with exterior edges 150-1 and 150-2 of linkages 110-1 and 110-2 respectively that flexes when joint 103-1 actuates between configurations 200 and 300. Section 212 is always unsupported by the linkages so that the pivot can actuate. In most embodiments of this mechanism, unsupported section 212 is a critical weak point in the outer material layer that drives many of the other design considerations. The only suitable region for attaching layer material layer 210 to the various instances of linkages 110 is at instances of edge portion 150. Edge 150 is the only portion of 110 across which the material layer 210 remains stationary relative to linkage 110 during actuation between the two configurations of the linkage assembly.

FIG. 4 depicts another example linkage assembly 400 that includes the pair of linkages 104 of FIG. 1 as a sub-assembly of linkage assembly 400. In this example, the pair of linkages 104, including first linkage 110-1 and second linkage 110-2 are rotated relative to each other about hinge 103-1 to provide first configuration 200 of FIG. 2. As previously described with reference to FIG. 2, hinge 103-1 of the pair of linkages 104 is formed by first pin-in-slot joint 112-1 and second pin-in-slot joint 114-1 that work together to allow the linkages to pivot about common radius center 142-1 and virtual pivot 144-1 located on or within the material layer.

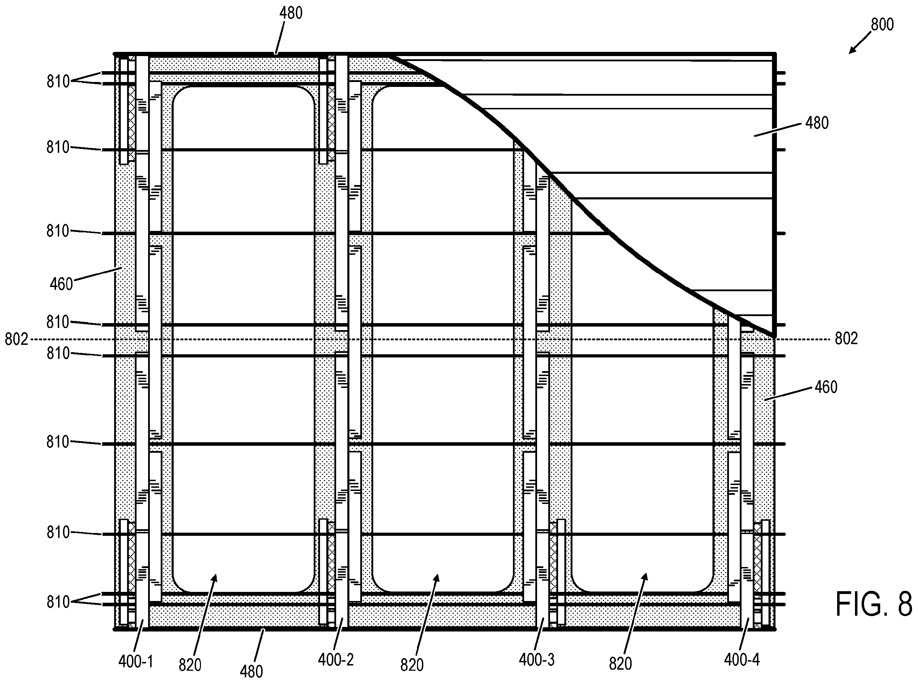

Linkage assembly 400 includes additional repeated instances of linkage configurations 110 and 110' of FIG. 1 that are rotatably coupled to each other via hinges that have the same configuration as hinge 103-1. Each instance of hinge 103-1 within linkage assembly 400 can also have a common radius center and virtual pivot that are located on or within the material layer (e.g., on a centerline of the material layer). In the example of FIG. 4, the various linkages of linkage assembly 400 collectively form an annular shape 402 that encloses an interior region 410. As an example, linkage assembly 400 can take the form of a structural rib of a reconfigurable structure, such as a fluid vessel (e.g., water tank, fuel tank, etc.), a conduit, or a wheel, additional examples of which are described with reference to FIGS. 8, 9, 10, 11, and 12.

Linkage assembly 400 further includes a third linkage 110-3 that is rotatably coupled to second linkage 110-2 via a hinge 103-2, a fourth linkage 110-4 that is rotatably coupled to third linkage 110-3 via a hinge 103-3, a fifth linkage 110-5 that is rotatably coupled to fourth linkage 110-4 via a hinge 103-4, a sixth linkage 110-6 that is rotatably coupled to fifth linkage 110-5 via a hinge 103-5, and a seventh linkage 110-7 that is rotatably coupled to sixth linkage 110-6 via a hinge 103-6. Each of hinges 103-2, 103-3, 103-4, 103-5, and 103-6 are formed by a respective a first pin-in-slot joint and second pin-in-slot joint, as previously described with reference to hinge 103-1. Accordingly, each of hinges 103-2, 103-3, 103-4, 103-5, and 103-6 form a respective virtual joint, as previously described with reference to virtual joint 148-1 of FIG. 1.

Linkages 110-1, 110-2, 110-3, 110-4, 110-5, 110-6, and 110-7 of linkage assembly 400 form a first linkage chain 412. Each pair of neighboring linkages of first linkage chain 412 are rotated relative to each other via a respective hinge that forms a virtual joint to provide the first configuration 200 of FIG. 2, thereby enclosing a portion of interior region 410. In this example, linkages 110-1, 110-2, and 110-3 are each an instance of linkage configuration 110 of FIG. 1 having a first orientation within first linkage chain 412; linkages 110-5, 110-6, and 110-7 are each an instance of linkage configuration 110 having a second orientation within first linkage chain 412 that opposes the first orientation; and linkage 110-4 is an instance of linkage configuration 110' of FIG. 1 that is located between linkage 110-3 and linkage 110-5. Features of linkage 110-4 that are hidden from view in FIG. 1 are depicted using broken lines.

Furthermore, in this example, linkage assembly 400 further includes a second linkage chain 414 that is similarly configured as first linkage chain 412, but as a mirror image of first linkage chain 412 about a central plane 416 that bisects linkage assembly 400. For example, linkage assembly 400 includes an eighth linkage 110-8 and a ninth linkage 110-9 that are rotatably coupled to each other via a hinge 103-7, a tenth linkage 110-10 that is rotatably coupled to ninth linkage 110-9 via a hinge 103-8, an eleventh linkage 110-11 that is rotatably coupled to tenth linkage 110-10 via a hinge 103-9, a twelfth linkage 110-12 that is rotatably coupled to eleventh linkage 110-11 via a hinge 103-10, a thirteenth linkage 110-12 that is rotatably coupled to twelfth linkage 110-12 via a hinge 103-11, and a fourteenth linkage 110-14 that is rotatably coupled to thirteenth linkage 110-13 via a hinge 103-12. Each of hinges 103-7, 103-8, 103-9, 103-10, 103-11, and 103-12 are formed by a respective a first pin-in-slot joint and second pin-in-slot joint, as previously described with reference to hinge 103-1. Accordingly, each of hinges 103-7, 103-8, 103-9, 103-10, 103-11, and 103-12 form a respective virtual joint, as previously described with reference to virtual joint 148-1 of FIG. 1.

As described above, linkages 110-8, 110-9, 110-10, 110-11, 110-12, 110-13, and 110-14 of linkage assembly 400 form second linkage chain 414. Each pair of neighboring linkages of second linkage chain 414 are rotated relative to each other via a respective hinge that forms a virtual joint to provide the first configuration 200 of FIG. 2, thereby enclosing a portion of interior region 410. In this example, linkages 110-8, 110-9, and 110-10 are each an instance of linkage configuration 110 of FIG. 1 having a first orientation within second linkage chain 414; linkages 110-12, 110-13, and 110-14 are each an instance of linkage configuration 110 having a second orientation within second linkage chain 414 that opposes the first orientation; and linkage 110-11 is an instance of linkage configuration 110' of FIG. 1 that is located between linkage 110-10 and linkage 110-12. Features of linkage 110-11 that are hidden from view in FIG. 1 are depicted using broken lines.

Linkage assembly 400 further includes a first base linkage sub-assembly 420 and a second base linkage sub-assembly 422 that rotatably couple first linkage chain 412 to second linkage chain 414. In this example, first base linkage sub-assembly 420 is rotatably coupled to first linkage 110-1 of first linkage chain 412 via a first hinge 424-1 and to eighth linkage 110-8 of second linkage chain 414 via a second hinge 424-2. Second base linkage sub-assembly 422 is rotatably coupled to seventh linkage 110-7 of first linkage chain 412 via a first hinge 426-1 and to fourteenth linkage 110-14 of second linkage chain 414 via a second hinge 426-2. As described in further detail with reference to FIG. 5, hinges 424-1, 424-2, 426-1, and 426-2 can be formed by two pin-in-slot joints or by a pin-in-slot joint and a pin-follower joint. Hinges 424-1, 424-2, 426-1, and 426-2 can take the form of virtual joints, as an example.

First base linkage sub-assembly 420 includes a base linkage 430, a first rocker linkage 432, and a second rocker linkage 434. First base linkage sub-assembly 420 is shown in FIG. 5 with first rocker linkage 432 and second rocker linkage 434 represented by broken lines to reveal underlying structure of base linkage 430.

Referring to FIGS. 4 and 5, first linkage 110-1 of first linkage chain 412 is rotatably coupled to base linkage 430 via first hinge 424-1 that includes a first pin-in-slot joint 436-1 and a first pin-follower joint 438-1 that are spaced apart from each other and have different orientations relative to each other within plane of rotation 116. First pin-in-slot joint 436-1 includes a pin 440-1 and a curved slot 442-1. Pin 440-1 is retained within and can travel along curved slot 442-1 as first linkage 110-1 is rotated relative to base linkage 430. Pin-follower joint 438-1 includes a pin 444-1 and a follower surface 446-1. Pin 444-1 is retained in contact with and can travel along follower surface 446-1 as first linkage 110-1 is rotated relative to base linkage 430. In this example, pin 444-1 is retained in contact with follower surface 446-1 by first rocker linkage 432, as described below. While first pin-follower joint 438-1 is utilized in this example, it will be understood that first pin-follower joint 438-1 can instead take the form of a pin-in-slot joint. In this alternative example, follower surface 446-1 can instead take the form of a curved slot formed within or otherwise defined by base linkage 430. In at least some examples, a follower surface can be used in place of an enclosed curved slot to comply with spatial constraints defining an envelope of the linkage assembly.

In this example, pins 440-1 and 444-1 are retained within circular openings formed within first linkage 110-1 or pins 440-1 and 444-1 are mounted to or integrated with first linkage 110-1, and curved slot 442-1 and follower surface 446-1 are formed within or defined by base linkage 430. In another example, pins 440-1 and 444-1 are retained within circular openings formed or defined within base linkage 430 or such pins are mounted to or integrated with base linkage 430, and curved slot 442-1 and follower surface 446-1 are formed within or otherwise defined by first linkage 110-1.

A first end of first rocker linkage 432 is rotatably coupled to base linkage 430 via a rotational joint 448-1, and a second end of rocker linkage 432 is coupled to first linkage 110-1 via pin 444-1. First rocker linkage 432 retains pin 444-1 in contact with follower surface 446-1 due to the first rocker linkage being coupled to base linkage 430 on a first end via rotational joint 448-1 and on a second end to pin 444-1. Furthermore, in this example, follower surface 446-1 includes a detent structure 450-1 that inhibits movement of pin 444-1 beyond a terminal end of the follower surface.

Eighth linkage 110-8 of second linkage chain 414 is rotatably coupled to base linkage 430 via second hinge 424-2 that includes a second pin-in-slot joint 436-2 and a second pin-follower joint 438-2 that are spaced apart from each other and have different orientations relative to each other within plane of rotation 116. Second pin-in-slot joint 436-2 includes a pin 440-2 and a curved slot 442-2. Pin 440-2 is retained within and can travel along curved slot 442-2 as eighth linkage 110-8 is rotated relative to base linkage 430. Pin-follower joint 438-2 includes a pin 444-2 and a follower surface 446-2. Pin 444-2 is retained in contact with and can travel along follower surface 446-2 as eighth linkage 110-8 is rotated relative to base linkage 430. In this example, pin 444-2 is retained in contact with follower surface 446-2 by second rocker linkage 434, as described below. While second pin-follower joint 438-2 is utilized in this example, it will be understood that second pin-follower joint 438-2 can instead take the form of a pin-in-slot joint.

In this example, pins 440-2 and 444-2 are retained within circular openings formed within eighth linkage 110-8 or such pins are mounted to or integrated with eighth linkage 110-8, and curved slot 442-2 and follower surface 446-2 are formed within or defined by base linkage 430. In another example, pins 440-2 and 444-2 are retained within circular openings of base linkage 430 or such pins are mounted to or integrated with base linkage 430, and curved slot 442-2 and follower surface 446-2 are formed within or otherwise defined by eighth linkage 110-8.

A first end of second rocker linkage 434 is rotatably coupled to base linkage 430 via a rotational joint 448-2, and a second end of rocker linkage 434 is coupled to eighth linkage 110-8 via pin 444-2. Second rocker linkage 434 retains pin 444-2 in contact with follower surface 446-2 due to the second rocker linkage being coupled to base linkage 430 on a first end via rotational joint 448-2 and on a second end to pin 444-2. Furthermore, in this example, follower surface 446-2 includes a detent structure 450-2 that inhibits movement of pin 444-2 beyond a terminal end of the follower surface.

Second base linkage sub-assembly 422, in this example, has the same configuration as first base linkage sub-assembly 420, but is orientated in an opposite direction from first base linkage sub-assembly 420. For example, second base linkage sub-assembly 422 is rotatably coupled to seventh linkage 110-7 of first linkage chain 412 via second hinge 426-1, and is rotatably coupled to fourteenth linkage 110-14 of second linkage chain 414 via hinge 426-2. First base linkage sub-assembly 420 and second base linkage sub-assembly 420 in combination with first linkage chain 412 and second linkage chain 414 form annular shape 402 that encloses interior region 410.

In at least some examples, linkage assembly 400 is retained in the configuration of FIG. 4 by a spine 460 that spans interior region 410 from first base linkage sub-assembly 420 to second base linkage sub-assembly 422. As an example, spine 460 can be coupled to first base linkage sub-assembly 420 and to second base linkage sub-assembly 422 as part of an assembly process to inhibit annular shape 402 of linkage assembly 400 from collapsing to a configuration shown in FIG. 6. Referring again to FIG. 5, base linkage 430 of first base linkage sub-assembly 420 and second base linkage sub-assembly 422 can each define a channel 462 that accommodates spine 460.

In at least some examples, linkages of linkage chains 412 and 414 can define one or more openings that accommodate longitudinal supports, such as stringers. Examples of such openings for longitudinal supports are depicted in FIG. 4 by reference numeral 470. These longitudinal supports or stringers can be used to secure multiple instances of linkage assembly 400 in a particular configuration, such as described with reference to FIG. 8.

FIG. 4 further depicts a material layer 480 mounted to and supported by linkage assembly 400. As previously described with reference to FIGS. 1-3, the hinges that form virtual joints of linkage assembly 400 enable the linkages of the linkage assembly to be rotated relative to each other between a first configuration shown in FIG. 4 and a second configuration shown in FIG. 6 while maintaining a constant length of the material layer across the range of motion. By maintaining a constant length, in-plane strain within the material layer 480 can be reduced or eliminated across the range of motion of the linkages.

FIG. 6 depicts linkage assembly 400 in the second configuration in which the annular shape 402 of FIG. 4 has been collapsed to a flattened shape 602. The flattened shape 602 of linkage assembly 400 occupies significantly less volume than the annular shape 402 of FIG. 4, enabling the linkage assembly to be flat-packed for storage and transport. To collapse linkage assembly 400 from the annual shape 420 to the flattened shape 602 shown in FIG. 6, an upper or lower edge of spine 460 can be unfastened from the linkages, material layer, and/or other components to enable the spine to remain within an interior region of the linkage assembly while configured as the flattened shape. Alternatively, the spine can be entirely separated from the linkage assembly as part of a disassembly process, in an example.

FIG. 7 depicts an example of base linkage sub-assembly 420 of FIG. 6 with first rocker linkage 432 and second rocker linkage 434 represented by broken lines to reveal underlying structure of base linkage 430. In the example of FIG. 7, pin 440-1 is located at an opposing terminal end of curved slot 442-1, and pin 440-2 is located at an opposing terminal end of curved slot 442-2 from the positions depicted in FIG. 5. Additionally, in FIG. 7, pin 444-1 is located at an opposing terminal end of follower surface 446-1, and pin 444-2 is located at an opposing terminal end of follower surface 446-2 from the positions depicted in FIG. 5. As previously described, base linkage sub-assembly 422 can be similarly configured as base linkage sub-assembly 420.

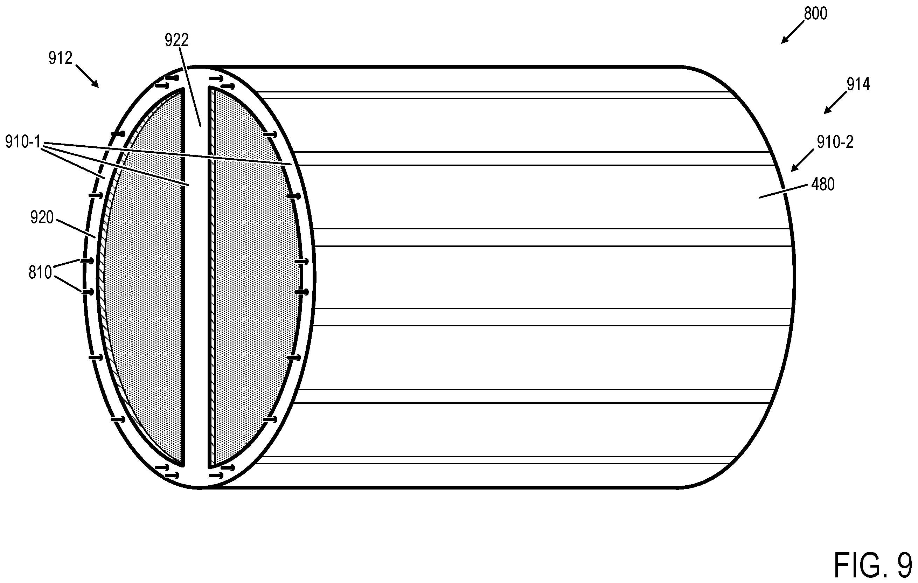

FIG. 8 depicts an example reconfigurable structure 800 that includes multiple instances of linkage assembly 400 of FIG. 4 that are identified by reference numerals 400-1, 400-2, 400-3, and 400-4. Reconfigurable structure 800 has a first configuration corresponding to an annual tube shape in FIG. 8. In this example, reconfigurable structure 800 takes the form of a fluid vessel, aspects of which are described in further detail with reference to FIGS. 9 - 11.

In FIG. 8, linkage assemblies 400-1, 400-2, 400-3, and 400-4 are depicted within a plane that is orthogonal to plane of rotation 116 of FIG. 4. In this example, linkage assemblies 400-1, 400-2, 400-3, and 400-4 are spaced apart from each other along a longitudinal axis 802. Linkage assemblies 400-1, 400-2, 400-3, and 400-4 take the form of structural ribs that collectively support material layer 480 that spans the linkage assemblies along longitudinal axis 802. While reconfigurable structure 800 includes four instances of linkage assembly 400 orientated parallel to each other, it will be understood that a reconfigurable structure can include any suitable quantity of linkage assemblies.

For a particular application, a continuous structural wall could be formed by stacking many instances of linkage assembly 400 side-by-side without changing or affecting kinematic properties of the linkage assemblies. These linkage stacks do not have to contain the same number of linkages and they increase in strength in direct proportion to the number of links in that stack. The ability to stack linkages enables the designer of the reconfigurable structure to tailor the strength of each stack to the loads and stresses in that part of the structure without adding unnecessary mass and cost. For example, a structure for containing a fluid may exhibit greatest stress at the bottom of the structure due to gravity, in such case it can be advantageous to place the largest stacks at the bottom of the structure.

Linkage assemblies 400-1, 400-2, 400-3, and 400-4 are retained in alignment with each other along longitudinal axis 802 by longitudinal supports or stringers 810 that pass through openings 470 in the linkage assemblies. Additionally, each of linkage assemblies 400-1, 400-2, 400-3, and 400-4 are retained in the annular shape 402 of FIG. 4 by rigid connections at the top and bottom with a common spine 460 that spans across each and all of the linkage assemblies. In this example, spine 460 includes openings 820 that serve as mass-saving cut outs in addition to enabling fluid contained within an interior region bounded by material layer 480 to migrate between opposing sides of the spine. Note that the rectangular geometry of each opening 820 is depicted for purposes of discussion and ease of illustration, and that these openings can have other suitable shapes (e.g., trusses) that distribute stress.

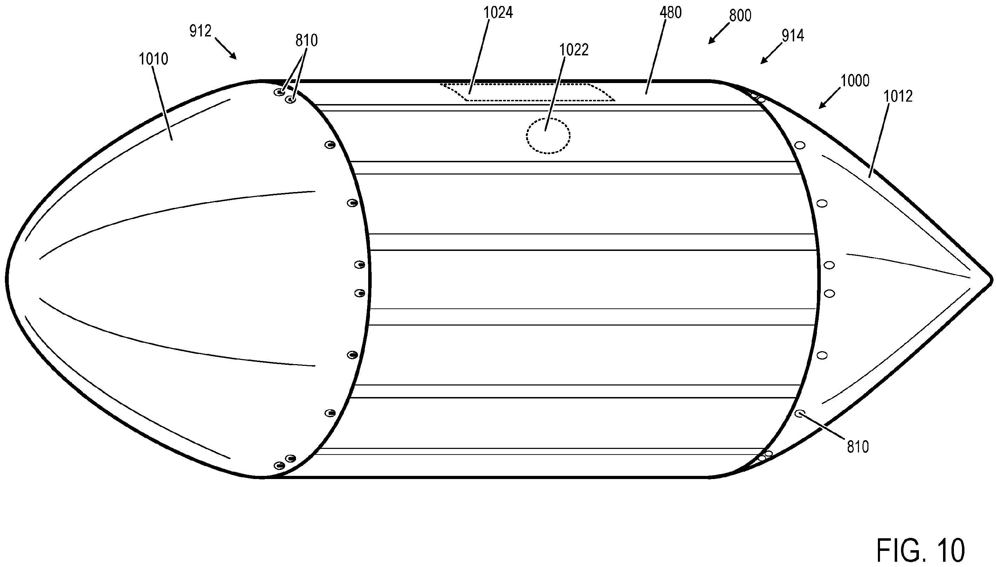

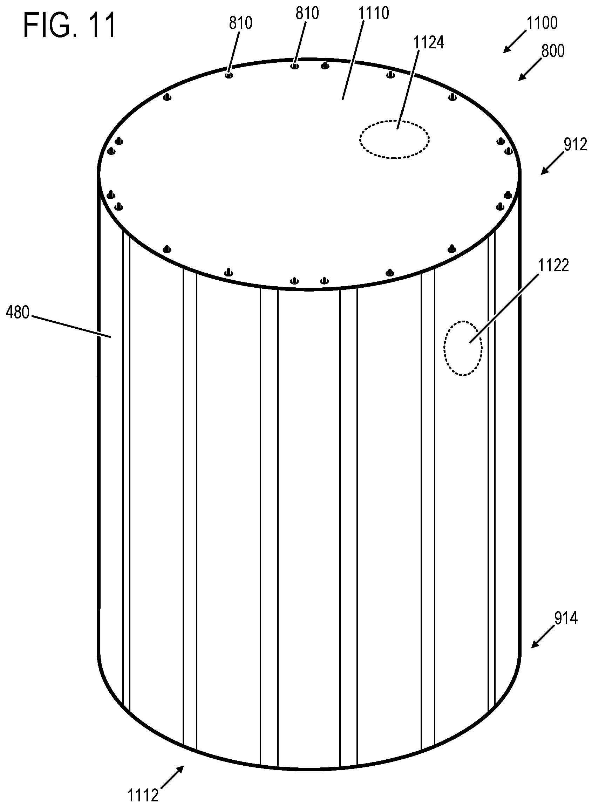

FIG. 9 depicts reconfigurable structure 800 including a first end support plate 910-1 installed on a first terminal end 912 of an annular tube formed by material layer 480. In this example, first end support plate 910-1 includes an annular ring portion 920 and a spanning portion 922 that spans the annular ring portion. First end support plate 910-1 can be mounted to one or more of spine 460, linkage assembly 400-1, and/or longitudinal supports or stringers 810. In this example, longitudinal supports or stringers 810 pass through corresponding openings formed within annular ring portion 920 of first end support plate 910-1. Reconfigurable structure 800 includes a second end support plate 910-2 that is identical to or similarly configured as first end support plate 910-1 installed on a second terminal end 914 of the annular tube shape formed by material layer 480. This configuration allows for tensile load to be transferred between opposing support plates 910-1 and 910-2 via the stringers 810 to avoid applying stress to the linkage assemblies (e.g., 400-1, 400-2, 400-3, and 400-4). Furthermore, end support plates 910-1 and 910-2 can provide additional support for the linkage assemblies to maintain the annular shape 402 depicted in FIG. 4, can serve as a double check for assembly technicians to ensure that the structure is assembled and deployed correctly, and can provide a rigid structure upon which end caps can be mounted, as described with reference to FIGS. 10 and 11. End support plates 910-1 and 910-2 support the interior of material layer 480 at and along the distal ends of the tube so that the material layer can be loaded on its exterior by end caps. This allows for the material layer 480 to be pitched in the radial direction between the end support plates on an interior side and the end caps on the exterior side so that a fluid tight barrier can be achieved on this seem. This feature enables potential applications as a deployable closed volume where there is a large pressure difference between the interior and the exterior of the volume such as for transporting pressurized gases or creating a large deployable water storage tank for disaster relief.

FIG. 10 depicts reconfigurable structure 800 including an end cap 1010 installed on first terminal end 912, and an end cap 1012 installed on second terminal end 914 of the annular tube formed by material layer 480. In this example, end caps 1010 and 1012 take the form of aerodynamic nose and tail cones, respectively. For example, reconfigurable structure 800 can take the form of a fluid vessel 1000, such as a drop tank that can be carried upon an aircraft or other aeronautical vehicle.

In this example, longitudinal supports or stringers 810 pass through openings formed within end caps 1010 and 1012. Terminal ends of the longitudinal supports or stringers 810 can include threads that accommodate a threaded nut or other fastener to enable end caps 1010 and 1012 to be tightened against first end support plate 910-1 and second end support plate 910-2, respectively. Seals can be included at an interface between the end caps (1010, 1012) and end support plates (910-1, 910-2), between the end caps and material layer 480, and between the end support plates and the material layer. Aerodynamic plugs can be added over recessed bolt heads in end caps to maintain a smooth exterior.

In at least some examples, fluid vessel 1000 can include an opening and cap represented schematically at 1022 that enables a fluid to be provided to or retrieved from an interior of the fluid vessel. Furthermore, in at least some examples, fluid vessel 1000 can include a mounting structure 1024 represented schematically in FIG. 10 that enables the fluid vessel to be mounted to another structure, such as an aircraft or other aeronautical vehicle, as an example. Providing an opening in location 1024 for a mounting structure can be advantageous because it enables for a direct interface with central spine 460.

FIG. 11 depicts another example of reconfigurable structure 800 including an end cap 1110 installed on first terminal end 912, and an end cap 1112 installed on second terminal end 914 of the annular tube shape formed by material layer 480. In this example, end caps 1010 and 1012 have a flat or planar configuration in contrast to the aerodynamic nose and tail cones of FIG. 10. As an example, reconfigurable structure 800 can take the form of a fluid storage container or barrel 1100.

In this example, longitudinal supports or stringers 810 pass through openings formed within end caps 1110 and 1112. Terminal ends of the longitudinal supports or stringers 810 can include threads that accommodate a threaded nut or other fastener to enable end caps 1110 and 1112 to be tightened against first end support plate 910-1 and second end support plate 910-2, respectively. Seals can be included at an interface between the end caps (1110, 1112) and end support plates (910-1, 910-2), between the end caps and material layer 480, and between the end support plates and the material layer. In at least some examples, fluid vessel 1100 can include an opening and cap represented schematically at 1122 within material layer 480 or at 1124 within end cap 1110 that enables a fluid to be provided to or retrieved from an interior of the fluid vessel.

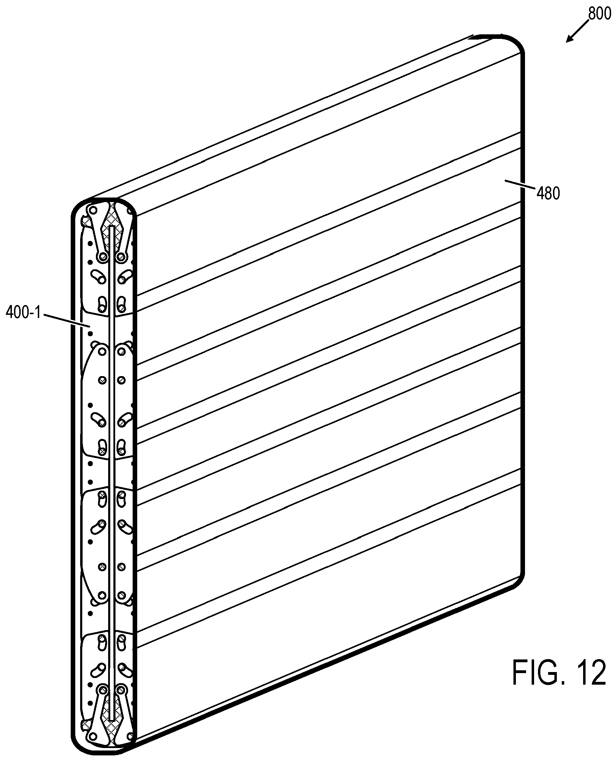

FIG. 12 depicts reconfigurable structure 800 of FIG. 8 in a second configuration in which the reconfigurable structure has been collapsed to a flattened shape, as previously described with reference to FIG. 6. The flattened shape of reconfigurable structure 800 occupies less volume than the annular tube shape of FIGS. 8 - 11, enabling the reconfigurable structure to be flat-packed for storage and transport, as an example.

In the example of FIG. 12, spine 460 of FIG. 8, end support plates 910-1 and 910-2 of FIG. 9, and end caps 1010 and 1012 of FIG. 10 or 111 and 1112 of FIG. 11 have been removed to enable reconfigurable structure 800 to be collapsed to the flattened shape. Spine 460, end support plates 910-1 and 910-2, and end caps 1110 and 1112, each having a flat or planar configuration can be flat packed with reconfigurable structure 800 for storage and transport.

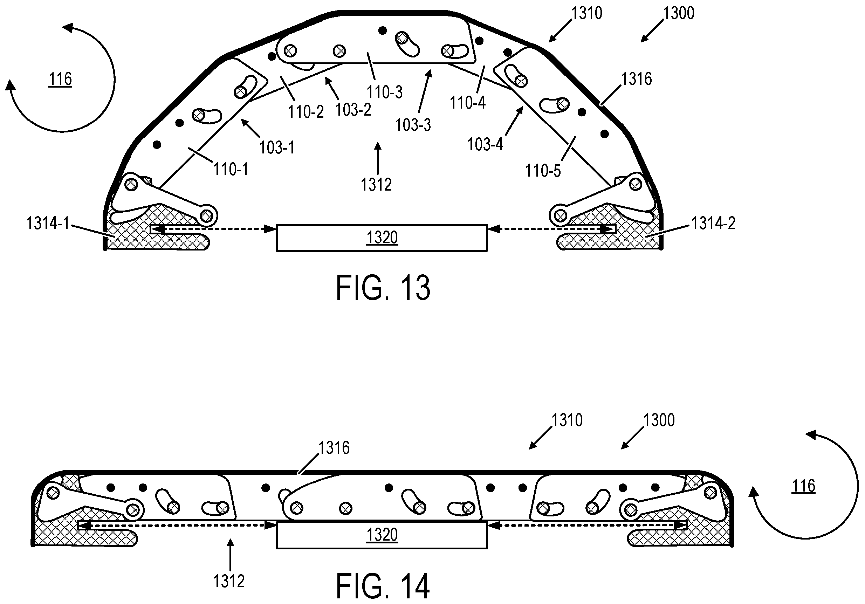

FIG. 13 depicts another example of a reconfigurable structure 1300 that can take the form of at least a portion of an airfoil, a hydrofoil, or a control surface, as examples. Reconfigurable structure 1300 includes one or more instances of linkage assembly 1310 that are spaced apart from each other along a longitudinal axis that is orthogonal to plane of rotation 116.

In this example, linkage assembly 1310 includes a linkage chain 1312 formed by linkages 110-1, 110-2, 110-3, 110-4, and 110-5 having the same configuration as previously described with reference to FIG. 4. For example, the linkages of linkage chain 1312 of linkage assembly 1310 are rotatably coupled to each other via hinges 103-1, 103-2, 103-3, and 103-4 in which each hinge is formed by a pair of pin-in-slot joints. In the example of FIG. 13, linkage assembly 1310 has a first configuration corresponding to a convex shape in which each linkage of linkage chain 1312 is rotated at an angle relative to its neighboring linkage(s), as previously described with reference to FIG. 2. While linkage chain 1312 includes five linkages in this example, it will be understood that linkage chain 1312 can include any suitable quantity of linkages.

Linkage assembly 1310 further includes a first base linkage sub-assembly 1314-1 and a second base linkage sub-assembly 1314-2 located at opposing terminal ends of linkage chain 1312. In this example, linkage 110-1 is rotatably coupled to first base linkage sub-assembly 1314-1, and linkage 110-5 is rotatably coupled to second base linkage sub-assembly 1314-2. First base linkage sub-assembly 1314-1 and second base linkage sub-assembly 1314-2 have a configuration that is similar to previously described base linkage sub-assemblies 420 and 422 of FIGS. 4 - 7 with respect to first linkage chain 412.

Reconfigurable structure 1300 further includes a material layer 1316 that is mounted to and supported by the linkages of linkage assembly 1310, as previously described with reference to FIGS. 1 - 4.

Reconfigurable structure 1300 can further include one or more actuators 1320, represented schematically in FIG. 13. The one or more actuators 1320 are operable to move reconfigurable structure 1300 between the first configuration of FIG. 13 and a second configuration of FIG. 14 corresponding to a flattened shape of the reconfigurable structure.

FIG. 14 depicts reconfigurable structure 1300 of FIG. 13 having a second configuration corresponding to a flattened shape due to rotation of the linkages of linkage assembly 1310 relative to each other within plane of rotation 116. Within the context of reconfigurable structure 1300 taking the form of at least a portion of an airfoil, a hydrofoil, or a control surface, the reconfigurable structure having the second configuration of FIG. 14 provides different aerodynamic or hydrodynamic performance characteristics as compared to the first configuration of FIG. 13.

As previously described with reference to the preceding examples, the material layers described herein can be mounted to and supported by linkages of one or more linkage assemblies of a reconfigurable structure. FIG. 15 depicts an example in which a material layer 1500 is mounted to and supported by example linkage 110-1A of linkage assembly 400-1 and linkage 110-1B of linkage assembly 400-2 via an intermediate structure that takes the form of a truss 1510. In this example, linkage 110-1A and linkage 110-1B represent instances of previously described first linkage 110-1 of FIGS. 1-4 and 6, and linkage assemblies 400-1 and 400-2 represent instances of previously described linkage assembly 400 of FIG. 4 that are spaced apart from each other, such as previously described with reference to FIG. 8.

In this example, truss 1510 spans linkage assemblies 400-1 and 400-2 to provide additional support to material layer 1500 between linkages 110-1A and 110-1B. Truss 1510 can further span other linkage assemblies or all linkage assemblies of the reconfigurable structure to provide additional support to material layer 1500 between other instances of linkage 110-1. Furthermore, in this example, truss 1510 is coupled to linkages 110-1A and 110-1B via brackets 1512A and 1512B. Within FIG. 15, instances of exterior edge portion 150-1 of linkage 110-1 as previously described with reference to FIGS. 1-3 are represented in FIG. 15 as exterior edge portion 150-1A of linkage 110-1A and exterior edge portion 150-1B of linkage 110-1B. In this example, truss 1510 spans linkage 110-1A and 110-1B between material layer 1500 and exterior edge portions 150-1A and 150-1B.

In at least some examples, each linkage of each linkage assembly of a reconfigurable structure can support one or more truss structures similar to truss 1510 to which the material layer is mounted and supported. For example, linkage assembly 400 of FIG. 4 can include trusses that mate with each of the linkages of each linkage assembly to form a network of light-weight reinforcements of the material layer that are orientated orthogonally to plane of rotation 116.

The various linkages described herein can be manufactured using any suitable set of techniques. As an example, the linkages can be formed by stamping, punching, cutting, and/or milling the linkages from a sheet material (e.g., metal sheeting) according to the various linkage configurations disclosed herein. In this example, the linkages can have a thickness as measured along an axis orthogonal to the plane of rotation (e.g., as depicted in FIG. 8) that is relatively thin as compared to a broad face of the linkages (e.g., as depicted in FIGS. 1-7). However, it will be understood that other suitable techniques can be used to manufacture the various linkages disclosed herein, including molding and/or additive manufacturing, as examples. The various components of the reconfigurable structures disclosed herein can be designed to approximate two-dimensional geometries and do not require tight tolerancing, which lends itself to being manufactured with budget sheet cutting techniques like laser cutting, water jet, or stamping, as examples.

The various material layers described herein can be mounted directly to linkages of a linkage assembly via mechanical fasteners, welds, and/or adhesives, as examples. As additional examples, the various material layers described herein can be mounted indirectly to linkages of a linkage assembly via an intermediate structure via mechanical fasteners, welds, and/or adhesives. As an example, the intermediate structure can include one or more instances of truss 1510 and brackets 1512A, 1512B, as described with reference to FIG. 15. In at least some examples, welding locations may be difficult to access, and fasteners may be too bulky. Components of the reconfigurable structures disclosed herein may be interlocking so that they do not require additional joining after initial assembly, and can provide a low-mass solution.

Furthermore, the following non-limiting examples compatible with the claimed subject matter may be proposed.

In the claimed linkage assembly, the respective hinge may include a first pin-in-slot joint formed by a first curved slot and a first pin retained within the first curved slot, and a second pin-in-slot joint formed by a second curved slot and a second pin retained within the second curved slot.

The linkage assembly may include the linkage chain. The linkage chain may form at least a portion of a fluid vessel. The linkage chain may form at least a portion of a conduit, an airfoil, a hydrofoil, a control surface, or a wheel.

It will be understood that the configurations and/or approaches described herein are exemplary in nature, and that these specific embodiments or examples are not to be considered in a limiting sense, because numerous variations are possible. The scope is defined by the appended claims.

## Claims

1. A linkage assembly (100, 400), comprising:
a pair of linkages (104) rotatably coupled to each other via a hinge (103) formed by a first pin-in-slot joint (112-1) and a second pin-in-slot joint (114-1);
wherein the first pin-in-slot joint (112-1) includes a first curved slot (120-1) formed within a first linkage (110-1) of the pair of linkages (104) and a first pin (118-1) of a second linkage (110-2) of the pair of linkages (104) that is retained within the first curved slot (120-1);
wherein the second pin-in-slot joint (114-1) includes a second curved slot (124-1) formed within the first linkage (110-1) of the pair of linkages (104) and a second pin (122-1) of the second linkage (110-2) of the pair of linkages (104) that is retained within the second curved slot (124-1); and
**characterized in that** a material layer (210, 480) is mounted to an exterior edge (146) of the pair of linkages (104);
wherein the material layer (210, 480) is configured to maintain a constant length across a range of motion of the pair of linkages (104) relative to each other within a plane of rotation (116) of the pair of linkages (104).

2. The linkage assembly (100, 400) of claim 1, wherein the first curved slot (120-1) forms an arc segment of a first circle (132), and the second curved slot (124-1) forms an arc segment of a second circle (136); and
wherein the first circle (132) and the second circle (136) have a common radius center (142) that is located on or within the material layer (210, 480) across the range of motion of the pair of linkages (104).

3. The linkage assembly (100, 400) of claim 2, wherein the common radius center (142) is located on a centerline (222) of the material layer (210, 480) within the plane of rotation (116).

4. The linkage assembly (100, 400) of claim 2 or 3, wherein the first circle (132) and the second circle (136) are concentric; and
wherein the first curved slot (120-1) and the second curved slot (124-1) define the same angular range of displacement.

5. The linkage assembly (100, 400) of any of claims 1 to 4, wherein the material layer (210, 480) is formed from a metal.

6. The linkage assembly (100, 400) of any of claims 1 to 5, wherein a first edge portion (150-1) of the exterior edge (146) of the first linkage (110-1) of the pair of linkages (104) is angled relative to a second edge portion (150-2) of the exterior edge (146) of the second linkage (110-2) of the pair of linkages (104) in a first configuration (200) in which the first pin (118-1) is located at a first terminal end (126-1) of the first curved slot (120-1) and the second pin (122-1) is located at a first terminal end (128-1) of the second curved slot (124-1); and
wherein the exterior edge (146) forms a convex shape (214) in the first configuration (200).

7. The linkage assembly (100, 400) of any of claims 1 to 6, wherein a first edge portion (150-1) of the exterior edge (146) of the first linkage (110-1) is colinear with a second edge portion (150-2) of the exterior edge (146) of the second linkage (110-2) in a second configuration (300) of the pair of linkages (104) in which the first pin (118-1) is located at a second terminal end (126-2) of the first curved slot (120-1) and the second pin (122-1) is located at a second terminal end (128-2) of the second curved slot (124-1); and
wherein the exterior edge (146) forms a flat shape (314) in the second configuration (300).

8. The linkage assembly (100, 400) of any of claims 1 to 7, wherein the pair of linkages (104) form part of a linkage chain (106, 412) with one or more additional linkages (110-3); and
wherein each linkage of the linkage chain (106, 412) is rotatably coupled to at least one neighboring linkage of the linkage chain (106, 412) via the respective hinge (103).

9. A reconfigurable structure (800, 1300), comprising:
a plurality of linkage assemblies (400-1, 400-2) according to claim 1, the plurality of linkage assemblies (400-1, 400-2) being spaced apart from each other along a longitudinal axis (802),
wherein the material layer (210, 480) is mounted to an exterior edge (146) of the plurality of linkages (102) of each of the plurality of linkage assemblies (400-1, 400-2); and
wherein the material layer (210, 480) is configured to maintain a constant length across a range of motion of the plurality of linkages (102) relative to each other within the plane of rotation (116) of each of the plurality of linkage assemblies (400-1, 400-2).

10. The reconfigurable structure (800, 1300) of claim 9, wherein the first pin-in-slot joint (112-1) includes a first curved slot (120-1) that forms an arc segment of a first circle (132), and the second pin-in-slot joint (114-1) includes a second curved slot (124-1) that forms an arc segment of a second circle (136); and
wherein the first circle (132) and the second circle (136) have a common radius center (142) that is located on or within the material layer (210, 480).

11. The reconfigurable structure (800, 1300) of claim 10, wherein the common radius center (142) is located on a centerline (222) of the material layer (210, 480).

12. The reconfigurable structure (800, 1300) of claim 10 or 11, wherein the first circle (132) and the second circle (136) are concentric; and
wherein the first curved slot (120-1) and the second curved slot (124-1) define the same angular range of displacement.

13. The reconfigurable structure (800, 1300) of any of claims 9 to 12, wherein the material layer (210, 480) forms a convex shape (214) in a first configuration (200) in which the plurality of linkages (102) of each linkage assembly (400) are angled relative to each other along the exterior edge (146) of that linkage assembly (400); and
wherein the material layer (210, 480) forms a flattened shape (602) in a second configuration (300).

14. The reconfigurable structure (800, 1300) of claim 13, further comprising, in the first configuration (200):
a first end cap (1110) mounted to a first terminal end (912) of an annular tube shape (402) of the material layer (210, 480);
a second end cap (1112) mounted to a second terminal end (914) of the annular tube shape (402) of the material layer (210, 480); and
a spine (460) coupled to each of the plurality of linkage assemblies (400-1, 400-2) along the longitudinal axis (802) and configured to span the annular tube shape (402).

15. The reconfigurable structure (800, 1300) of any of claims 9 to 14, wherein the reconfigurable structure (800, 1300) forms at least a portion of a fluid vessel (1000), a conduit, an airfoil, a hydrofoil, a control surface, or a wheel.

## Patentansprüche

1. Verbindungsanordnung (100, 400), umfassend:
ein Paar von Verbindungen (104), welche rotierbar miteinander über ein Scharnier (103), welches durch ein erstes Stift-in-Langloch-Gelenk (112-1) und ein zweites Stift-in-Langloch-Gelenk (114-1) gebildet ist, verbunden sind;
wobei das erste Stift-in-Langloch-Gelenk (112-1) ein erstes gekrümmtes Langloch (120-1), welches in einer ersten Verbindung (110-1) des Paars von Verbindungen (104) gebildet ist, und einen ersten Stift (118-1) einer zweiten Verbindung (110-2) des Paars von Verbindungen (104) umfasst, welcher in dem ersten gekrümmten Langloch (120-1) gesichert ist;
wobei das zweite Stift-in-Langloch-Gelenk (114-1) ein zweites gekrümmtes Langloch (124-1), welches in der ersten Verbindung (110-1) des Paars von Verbindungen (104) gebildet ist, und einen zweiten Stift (122-1) der zweiten Verbindung (110-2) des Paars von Verbindungen (104) umfasst, welcher in dem zweiten gekrümmten Langloch (124-1) gesichert ist; und
**dadurch gekennzeichnet, dass** eine Materialschicht (210, 480) an einem äußeren Rand (146) des Paars von Verbindungen (104) angebracht ist;
wobei die Materialschicht (210, 480) dazu eingerichtet ist, eine konstante Länge über einen Bewegungsbereich des Paars von Verbindungen (104) relativ zueinander innerhalb einer Rotationsebene (116) des Paars von Verbindungen (104) aufrechtzuerhalten.

2. Verbindungsanordnung (100, 400) nach Anspruch 1, wobei das erste gekrümmte Langloch (120-1) ein Kreisbogenteilstück eines ersten Kreises (132) bildet und das zweite gekrümmte Langloch (124-1) ein Kreisbogenteilstück eines zweiten Kreises (136) bildet; und
wobei der erste Kreis (132) und der zweite Kreis (136) einen gemeinsamen Radiusmittelpunkt (142) aufweisen, welcher auf oder innerhalb der Materialschicht (210, 480) entlang des Bewegungsbereichs des Paars von Verbindungen (104) angeordnet ist.

3. Verbindungsanordnung (100, 400) nach Anspruch 2, wobei der gemeinsame Radiusmittelpunkt (142) auf einer Mittellinie (222) der Materialschicht (210, 480) innerhalb der Rotationsebene (116) angeordnet ist.

4. Verbindungsanordnung (100, 400) nach Anspruch 2 oder 3, wobei der erste Kreis (132) und der zweite Kreis (136) konzentrisch sind; und
wobei das erste gekrümmte Langloch (120-1) und das zweite gekrümmte Langloch (124-1) denselben Winkelbereich einer Verschiebung definieren.

5. Verbindungsanordnung (100, 400) nach einem der Ansprüche 1 bis 4, wobei die Materialschicht (210, 480) aus einem Metall gebildet ist.

6. Verbindungsanordnung (100, 400) nach einem der Ansprüche 1 bis 5, wobei ein erster Randabschnitt (150-1) des äußeren Rands (146) der ersten Verbindung (110-1) des Paars von Verbindungen (104) in einer ersten Konfiguration (200), in welcher der erste Stift (118-1) an einer ersten Endstelle (126-1) des ersten gekrümmten Langlochs (120-1) angeordnet ist und der zweite Stift (122-1) an einer ersten Endstelle (128-1) des zweiten gekrümmten Langlochs (124-1) angeordnet ist, relativ zu einem zweiten Randabschnitt (150-2) des äußeren Rands (146) der zweiten Verbindung (110-2) des Paars von Verbindungen (104) angewinkelt ist; und
wobei der äußere Rand (146) eine konvexe Form (214) in der ersten Konfiguration (200) bildet.

7. Verbindungsanordnung (100, 400) nach einem der Ansprüche 1 bis 6, wobei ein erster Randabschnitt (150-1) des äußeren Rands (146) der ersten Verbindung (110-1) in einer zweiten Konfiguration (300) des Paars von Verbindungen (104), in welcher der erste Stift (118-1) an einer zweiten Endstelle (126-2) des ersten gekrümmten Langlochs (120-1) angeordnet ist und der zweite Stift (122-1) an einer zweiten Endstelle (128-2) des zweiten gekrümmten Langlochs (124-1) angeordnet ist, mit einem zweiten Randabschnitt (150-2) des äußeren Rands (146) der zweiten Verbindung (110-2) kollinear ist; und
wobei der äußere Rand (146) in der zweiten Konfiguration (300) eine flache Form (314) bildet.

8. Verbindungsanordnung (100, 400) nach einem der Ansprüche 1 bis 7, wobei das Paar von Verbindungen (104) einen Teil einer Verbindungskette (106, 412) mit einer oder mehreren zusätzlichen Verbindungen (110-3) bildet; und
wobei jede Verbindung der Verbindungskette (106, 412) über das jeweilige Scharnier (103) rotierbar mit wenigstens einer benachbarten Verbindung der Verbindungskette (106, 412) verbunden ist.

9. Rekonfigurierbare Struktur (800, 1300), umfassend:
eine Mehrzahl von Verbindungsanordnungen (400-1, 400-2) nach Anspruch 1, wobei die Mehrzahl von Verbindungsanordnungen (400-1, 400-2) entlang einer Längsachse (802) voneinander beabstandet sind;
wobei die Materialschicht (210, 480) an einem äußeren Rand (146) der Mehrzahl von Verbindungen (102) jeder der Mehrzahl von Verbindungsanordnungen (400-1, 400-2) angebracht ist; und
wobei die Materialschicht (210, 480) dazu eingerichtet ist, eine konstante Länge über einen Bewegungsbereich der Mehrzahl von Verbindungen (102) relativ zueinander innerhalb der Rotationsebene (116) jeder der Mehrzahl von Verbindungsanordnungen (400-1, 400-2) aufrechtzuerhalten.

10. Rekonfigurierbare Struktur (800, 1300) nach Anspruch 9, wobei das erste Stift-in-Langloch-Gelenk (112-1) ein erstes gekrümmtes Langloch (120-1) umfasst, welches ein Kreisbogenteilstück eines ersten Kreises (132) bildet, und das zweite Stift-in-Langloch-Gelenk (114-1) ein zweites gekrümmtes Langloch (124-1) umfasst, welches ein Kreisbogenteilstück eines zweiten Kreises (136) bildet; und
wobei der erste Kreis (132) und der zweite Kreis (136) einen gemeinsamen Radiusmittelpunkt (142) aufweisen, welcher auf oder innerhalb der Materialschicht (210, 480) angeordnet ist.

11. Rekonfigurierbare Struktur (800, 1300) nach Anspruch 10, wobei der gemeinsame Radiusmittelpunkt (142) auf einer Mittellinie (222) der Materialschicht (210, 480) angeordnet ist.

12. Rekonfigurierbare Struktur (800, 1300) nach Anspruch 10 oder 11, wobei der erste Kreis (132) und der zweite Kreis (136) konzentrisch sind; und
wobei das erste gekrümmte Langloch (120-1) und das zweite gekrümmte Langloch (124-1) denselben Winkelbereich einer Verschiebung definieren.

13. Rekonfigurierbare Struktur (800, 1300) nach einem der Ansprüche 9 bis 12, wobei die Materialschicht (210, 480) in einer ersten Konfiguration (200), in welcher die Mehrzahl von Verbindungen (102) jeder Verbindungsanordnung (400) relativ zueinander entlang des äußeren Rands (146) dieser Verbindungsanordnung (400) angewinkelt sind, eine konvexe Form (214) bildet; und
wobei die Materialschicht (210, 480) in einer zweiten Konfiguration (300) eine abgeflachte Form (602) bildet.

14. Rekonfigurierbare Struktur (800, 1300) nach Anspruch 13, ferner umfassend, in der ersten Konfiguration (200):
eine erste Endkappe (1110), welche an einer ersten Endstelle (912) einer ringförmigen Rohrform (402) der Materialschicht (210, 480) angebracht ist;
eine zweite Endkappe (1112), welche an einer zweiten Endstelle (914) der ringförmigen Rohrform (402) der Materialschicht (210, 480) angebracht ist; und
einen Längsträger (460), welcher mit jeder der Mehrzahl von Verbindungsanordnungen (400-1, 400-2) entlang der Längsachse (802) gekoppelt und dazu eingerichtet ist, die ringförmige Rohrform (402) zu überspannen.

15. Rekonfigurierbare Struktur (800, 1300) nach einem der Ansprüche 9 bis 14, wobei die rekonfigurierbare Struktur (800, 1300) wenigstens einen Abschnitt eines Fluidbehälters (1000), eines Leitungsrohrs, eines Tragflügelprofils, eines Hydrofoils, einer Steuerfläche oder eines Rades bildet.

## Revendications

1. Ensemble de liaison (100, 400), comprenant :
une paire de liaisons (104) couplées l'une à l'autre de manière rotative par le biais d'une charnière (103) formée par un premier joint à goupille dans une fente (112-1) et un second joint à goupille dans une fente (114-1) ;
dans lequel le premier joint à goupille dans une fente (112-1) comporte une première fente incurvée (120-1) formée au sein d'une première liaison (110-1) de la paire de liaisons (104) et une première goupille (118-1) d'une seconde liaison (110-2) de la paire de liaisons (104) qui est retenue au sein de la première fente incurvée (120-1) ;
dans lequel le second joint à goupille dans une fente (114-1) comporte une seconde fente incurvée (124-1) formée au sein de la première liaison (110-1) de la paire de liaisons (104) et une seconde goupille (122-1) de la seconde liaison (110-2) de la paire de liaisons (104) qui est retenue au sein de la seconde fente incurvée (124-1) ; et
**caractérisé en ce qu'**une couche de matériau (210, 480) est montée sur un bord extérieur (146) de la paire de liaisons (104) ;
dans lequel la couche de matériau (210, 480) est conçue pour maintenir une longueur constante sur une plage de mouvement de la paire de liaisons (104) l'une par rapport à l'autre dans un plan de rotation (116) de la paire de liaisons (104).

2. Ensemble de liaison (100, 400) selon la revendication 1, dans lequel la première fente incurvée (120-1) forme un segment d'arc d'un premier cercle (132) et la seconde fente incurvée (124-1) forme un segment d'arc d'un second cercle (136) ; et
dans lequel le premier cercle (132) et le second cercle (136) ont un centre de rayon commun (142) qui est situé sur ou à l'intérieur de la couche de matériau (210, 480) sur la plage de mouvement de la paire de liaisons (104).

3. Ensemble de liaison (100, 400) selon la revendication 2, dans lequel le centre de rayon commun (142) est situé sur une ligne centrale (222) de la couche de matériau (210, 480) dans le plan de rotation (116).

4. Ensemble de liaison (100, 400) selon la revendication 2 ou 3, dans lequel le premier cercle (132) et le second cercle (136) sont concentriques ; et
dans lequel la première fente incurvée (120-1) et la seconde fente incurvée (124-1) définissent la même plage angulaire de déplacement.

5. Ensemble de liaison (100, 400) selon l'une quelconque des revendications 1 à 4, dans lequel la couche de matériau (210, 480) est formée à partir d'un métal.

6. Ensemble de liaison (100, 400) selon l'une quelconque des revendications 1 à 5, dans lequel une première partie de bord (150-1) du bord extérieur (146) de la première liaison (110-1) de la paire de liaisons (104) est inclinée par rapport à une seconde partie de bord (150-2) du bord extérieur (146) de la seconde liaison (110-2) de la paire de liaisons (104) dans une première configuration (200) dans laquelle la première goupille (118-1) est située à une première extrémité terminale (126-1) de la première fente incurvée (120-1) et la seconde goupille (122-1) est située au niveau d'une première extrémité terminale (128-1) de la seconde fente incurvée (124-1) ; et
dans lequel le bord extérieur (146) forme une forme convexe (214) dans la première configuration (200).

7. Ensemble de liaison (100, 400) selon l'une quelconque des revendications 1 à 6, dans lequel une première partie de bord (150-1) du bord extérieur (146) de la première liaison (110-1) est colinéaire avec une seconde partie de bord (150-2) du bord extérieur (146) de la seconde liaison (110-2) dans une seconde configuration (300) de la paire de liaisons (104) dans laquelle la première goupille (118-1) est située à une seconde extrémité terminale (126-2) de la première fente incurvée (120-1) et la seconde goupille (122-1) est située à une seconde extrémité terminale (128-2) de la seconde fente incurvée (124-1) ; et
dans lequel le bord extérieur (146) forme une forme plate (314) dans la seconde configuration (300).

8. Ensemble de liaison (100, 400) selon l'une quelconque des revendications 1 à 7, dans lequel la paire de liaisons (104) fait partie d'une chaîne de liaison (106, 412) avec une ou plusieurs liaisons supplémentaires (110-3) ; et
dans lequel chaque liaison de la chaîne de liaison (106, 412) est couplée en rotation à au moins une liaison voisine de la chaîne de liaison (106, 412) par le biais de la charnière (103) respective.

9. Structure reconfigurable (800, 1300), comprenant :
une pluralité d'ensembles de liaison (400-1, 400-2) selon la revendication 1, la pluralité d'ensembles de liaison (400-1, 400-2) étant espacés les uns des autres le long d'un axe longitudinal (802),
dans laquelle la couche de matériau (210, 480) est montée sur un bord extérieur (146) de la pluralité de liaisons (102) de chacun de la pluralité d'ensembles de liaison (400-1, 400-2) ; et
dans lequel la couche de matériau (210, 480) est conçue pour maintenir une longueur constante sur une plage de mouvement de la pluralité de liaisons (102) l'une par rapport à l'autre dans le plan de rotation (116) de chacun de la pluralité d'ensembles de liaisons (400-1, 400-2).

10. Structure reconfigurable (800, 1300) selon la revendication 9, dans laquelle le premier joint à goupille dans une fente (112-1) comporte une première fente incurvée (120-1) qui forme un segment d'arc d'un premier cercle (132) et le second joint à goupille dans une fente (114-1) comporte une seconde fente incurvée (124-1) qui forme un segment d'arc d'un second cercle (136) ; et
dans lequel le premier cercle (132) et le second cercle (136) ont un centre de rayon commun (142) qui est situé sur ou à l'intérieur de la couche de matériau (210, 480).

11. Structure reconfigurable (800, 1300) selon la revendication 10, dans laquelle le centre de rayon commun (142) est situé sur une ligne centrale (222) de la couche de matériau (210, 480).

12. Structure reconfigurable (800, 1300) selon la revendication 10 ou 11, dans laquelle le premier cercle (132) et le second cercle (136) sont concentriques ; et
dans lequel la première fente incurvée (120-1) et la seconde fente incurvée (124-1) définissent la même plage angulaire de déplacement.

13. Structure reconfigurable (800, 1300) selon l'une quelconque des revendications 9 à 12, dans laquelle la couche de matériau (210, 480) forme une forme convexe (214) dans une première configuration (200) dans laquelle la pluralité de liaisons (102) de chaque ensemble de liaison (400) sont inclinées l'une par rapport à l'autre le long du bord extérieur (146) de cet ensemble de liaison (400) ; et
dans lequel la couche de matériau (210, 480) forme une forme aplatie (602) dans une seconde configuration (300).

14. Structure reconfigurable (800, 1300) selon la revendication 13, comprenant en outre, dans la première configuration (200) :
un premier capuchon d'extrémité (1110) monté sur une première extrémité terminale (912) d'une forme de tube annulaire (402) de la couche de matériau (210, 480) ;
un second capuchon d'extrémité (1112) monté sur une seconde extrémité terminale (914) de la forme de tube annulaire (402) de la couche de matériau (210, 480) ; et
une colonne (460) couplée à chacun de la pluralité d'ensembles de liaison (400-1, 400-2) le long de l'axe longitudinal (802) et conçue pour s'étendre sur la forme de tube annulaire (402).

15. Structure reconfigurable (800, 1300) selon l'une quelconque des revendications 9 à 14, dans laquelle la structure reconfigurable (800, 1300) forme au moins une partie d'un récipient de fluide (1000), un conduit, un aileron, un hydrofoil, une surface de contrôle, ou une roue.
